# EUROPEAN PATENT APPLICATION

(11) **EP 2 755 398 A1**
(43) Date of publication of application: **16.07.2014**
(21) Application number: 13198242.3
(22) Date of filing: 18.12.2013
(51) Int. Cl.: H04N 21/41, H04N 21/443, H04N 21/422, H04N 21/4363, H04N 21/442, H04N 21/485

(54) **Display apparatus, terminal, and a method of providing video using the display apparatus**

(30) Priority: 11.01.2013 KR 20130003529
(71) Applicant: Samsung Electronics Co., Ltd, Gyeonggi-do 443-742 (KR)
(72) Inventor: Kim, Chi-won, Gyeonggi-do (KR); Pi, Kun-done, Gyeonggi-do (KR)
(74) Representative: Hewett, Jonathan Michael Richard

(57) **Abstract**

The display apparatus includes a video receptor configured to receive a video signal; a displayer configured to display an image; a communicator configured to receive an input signal from an external terminal and transmit the video signal to the external terminal; and a controller configured to monitor whether the input signal is received through the communicator, and change an operating mode to a transmission mode from an off mode in which the displayer and the video receptor are in an off state and control the communicator to transmit the video signal to the external terminal transmitting a video transmission request in response to the received input signal including the video transmission request.

## Description

The present invention relates to a display apparatus, a terminal, and a method of providing a video using the display apparatus. In particular, the present invention relates to a display apparatus capable of transmitting and receiving an image signal through a wireless communication function, a terminal, and a method of providing a video using the display apparatus.

With the widespread use of mobile terminals in the related art, such as smart phones and tablet PCs, there are a growing number of users utilizing mobile terminals to watch video. The mobile terminals of the related art facilitate video content watching due to their portability. However, the mobile terminals of the related art a limited screen size.

In contrast to mobile terminals, display apparatuses, such as TVs, are not portable, but provide a large screen to display videos. Users may utilize display apparatuses to watch video content indoors (i.e., where the display apparatuses are installed). Users may utilize mobile terminals outside or indoors (i.e., when they cannot watch video content via display apparatuses). Thus, if it is possible to relay video content viewed on a display apparatus to a mobile terminal for display, user convenience will be enhanced.

A display apparatus of the related art is also embedded with wireless communication functions, in which an image signal is transmitted to a mobile terminal of the related art, so that a user can receive the same image in the mobile terminal as the display apparatus. However, to watch the image of the display apparatus using the mobile terminal according to the related art, the user needs to conduct inconvenient and complicated processes, such as turning on the display apparatus, connecting the display apparatus to a network, and setting an image signal transmission function. Further, to transmit an image to the mobile terminal of the related art, wireless communication functions need to always be on. Thus, power consumption of the wireless communication functions may be high.

An aspect of one or more exemplary embodiments of the present invention may provide an environment to enable a user to watch a video of a display apparatus through a terminal using a simple motion.

Another aspect of one or more exemplary embodiments may reduce power consumption when watching the video of the display apparatus through the terminal.

According to an aspect of an exemplary embodiment, a display apparatus may include: a video receptor configured to receive a video signal; a displayer configured to receive an image; a communicator configured to receive an input signal from an external terminal and transmit the video signal to the external terminal; and a controller configured to monitor whether the input signal is received through the communicator, and change an operating mode to a transmission mode from an off mode in which the displayer and the video receptor are in an off state, and control the communicator to transmit the video signal to the external terminal transmitting a video transmission request in response to the received input signal including the video transmission request.

The communicator may include a first communicator configured to receive the input signal and a second communicator configured to transmit the video signal, and the first communicator and the second communicator use different communication modes.

The controller may include a first controller configured to monitor whether the first communicator receives the input signal and a second controller configured to control the second communicator to transmit the video signal to the terminal.

The display apparatus may further include a power supplier configured to supply power, the power supplier may include a power controller configured to control supply of the power to the first communicator and the first controller in the off mode and control supply of the power to the first communicator, the first controller, the second communicator, and the second controller in the transmission mode.

The first communicator may be configured to receive the input signal from the terminal in accordance with a Bluetooth standard, and the second communicator may be configured to transmit the video signal to the terminal via a Wi-Fi network.

The controller may be configured to control the second communicator to stop transmitting the video signal in response to the terminal being out of the Wi-Fi network.

The controller may be configured to change the operating mode to the off mode and turn off the second communicator in response to transmission of the video signal being stopped.

The communicator may be configured to receive the input signal from the terminal and transmit the video signal to the terminal via Wi-Fi.

The controller may include a first controller configured to monitor whether the communicator receives the input signal and a second controller configured to control the communicator to transmit the video signal to the terminal.

The display apparatus may further include a power supplier configured to supply power, the power supplier may include a power controller configured to control supply of the power to the communicator and the first controller in the off mode and control supply of the power to the communicator, the first controller and the second controller in the transmission mode.

The controller may be configured to change the operating mode to a display mode and control display of the video signal on the displayer in response to the input signal including a video display request.

The controller may be configured to stop transmitting the video signal through the communicator in response to the operating mode being changed to the display mode.

According to another aspect of an exemplary embodiment, a terminal may include: a touch panel configured to receive a user input; a communicator configured to transmit a user input signal through the touch panel and receive a video signal from a display apparatus; and a controller configured to control the communicator to transmit an input signal including at least one of a video transmission request, a video display request, and a power off request to the display apparatus, in response to the user input through the touch panel including the at least one of the video transmission request, the video display request, and the power off request, and controlling the touch panel to display the video signal received from the display apparatus through the communicator.

The controller may be configured to control the communicator to transmit the input signal including the video transmission request in response to the user input being a motion of touching a spot on the touch panel and moving the user input on the touch panel in a first direction, and transmit the input signal including the video display request in response to the user input being the motion of touching the spot on the touch panel and moving the user input on the touch panel in a second direction, which is opposite of the first direction.

The communicator may include a first communicator configured to transmit the input signal to the display apparatus in accordance with a Bluetooth standard and a second communicator configured to receive the video signal from the display apparatus via Wi-Fi.

According to another further aspect of an exemplary embodiment, a method of providing a video of a display apparatus may include: receiving an input signal corresponding to a user input from an external terminal; changing an operating mode to a transmission mode from an off mode in response to the received input signal including a video transmission request; turning on a communicator configured to transmit a video signal to the external terminal; and transmitting the video signal to the external terminal through the communicator.

The receiving the user input may further include a video display request from the external terminal; and changing the operating mode to a display mode and displaying the video signal.

The method further may include stopping transmitting of the video signal in response to the operating mode being changed to the display mode.
The method further may include changing the operating mode to the off mode in response to transmission of the video signal being stopped.

The receiving the input signal may be conducted by a Bluetooth communication module, and the transmitting the video signal may be conducted by a Wi-Fi communication module.

A power may be supplied to the Bluetooth communication module in response to the operating mode being in the off mode, and the power may be supplied to the Bluetooth communication module and the Wi-Fi communication module in response to the operating mode being the transmission mode.

The display apparatus may stop transmitting the video signal in response to the external terminal being out of a Wi-Fi network.

The receiving the input signal and the transmitting the video signal may be conducted by a Wi-Fi communication module.

According to another further aspect of an exemplary embodiment, a method of displaying a video may include changing an operating mode of a display apparatus to a transmission mode from an off mode when a received input signal comprises a video transmission request; transmitting a video signal to an external terminal from the display apparatus in the transmission mode; and displaying the video signal on the external terminal.

As described above, one or more exemplary embodiments may provide an environment to enable a user to watch a video of a display apparatus through a terminal using a simple motion.

The above and/or other aspects will become apparent and more readily appreciated from the following description of the exemplary embodiments, taken in conjunction with the accompanying drawings, in which:
FIG. 1 schematically illustrates a display system according to an exemplary embodiment.
FIG. 2 is a block diagram illustrating a display apparatus and a terminal according to a first exemplary embodiment.
FIGS. 3A to 3C illustrate supply of power in each operating mode according to the first exemplary embodiment.
FIG. 4 is a block diagram illustrating a display apparatus and a terminal according to a second exemplary embodiment.
FIGS. 5A to 5C illustrate supply of power in each operating mode according to the second exemplary embodiment.
FIGS. 6A to 6C illustrate transmission/display of an image in each operating mode.
FIG. 7 illustrates a user input onto a touch panel.
FIG. 8 is a flowchart illustrating a method of providing a video according to an exemplary embodiment.

Below, exemplary embodiments will be described in detail with reference to the accompanying drawings, such that a person having ordinary skill in the art would be able to implement the exemplary embodiments. The present invention may be embodied in various forms without being limited to the exemplary embodiments set forth herein. Descriptions of well-known parts are omitted for clarity and conciseness, and like reference numerals refer to like elements throughout.

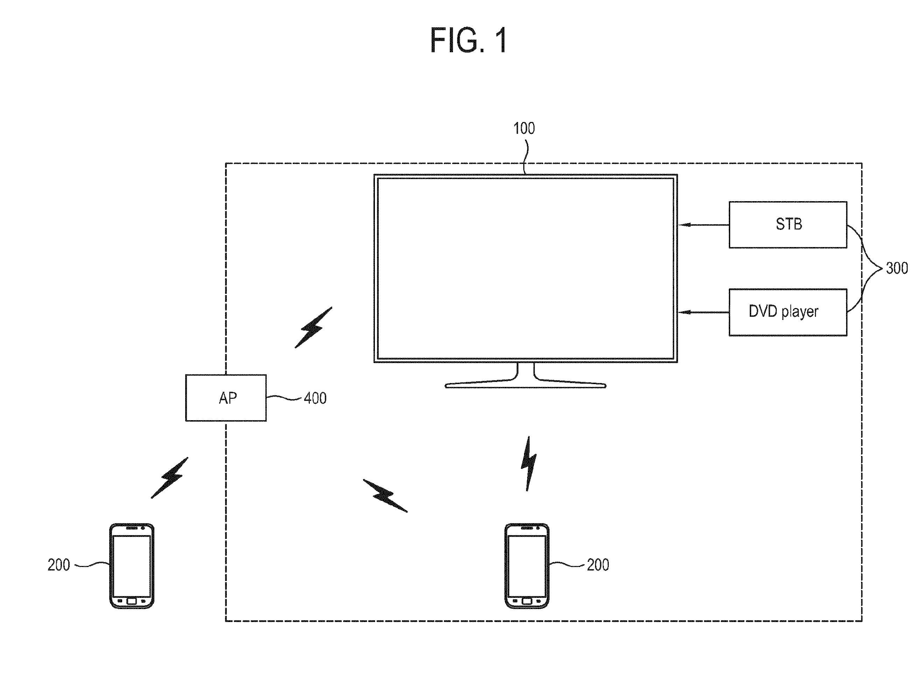

FIG. 1 schematically illustrates a display system according to an exemplary embodiment.

Referring to FIG. 1, a display apparatus 100 serves to process broadcast signals received via terrestrial, cable, and satellite means, or video signals received from a video source 300 connected through a cable or wireless communication, such as a set-top box (STB) and a DVD player, according to video processing processes. Further, the display apparatus 100 may display the signals. The display apparatus 100 may have a wireless communication function, e.g., Bluetooth and Wi-Fi, to transmit/receive various kinds of signals including user input signals and video signals to/from external devices.

A terminal 200 may be configured as a device which has a communication function and is capable of displaying a video through a display panel, e.g., a smartphone and a tablet PC. The terminal 200 may not only transmit and receive signals via a base station through a mobile communication network in accordance with 3G and 4G standards, but have a communication function through Bluetooth and Wi-Fi similar to the display apparatus 100. Bluetooth consumes less power and has a narrow bandwidth. Thus, Bluetooth is primarily used for transmission and reception of user input signals for power on/off, channel changes, and display control. Wi-Fi may be used to transmit and receive video signals due to a wide bandwidth. The wide bandwidth may be large enough to transmit high-capacity data. Alternatively, Bluetooth may be used to transmit and receive video signals, and Wi-Fi may be used to receive user input signals.

The display system according to the present embodiment may transmit a video of the display apparatus 100, i.e., a video signal received from the video source 300, to at least one terminal 200. In particular, in the following exemplary embodiments, the display system may reduce power consumption and enable a user to watch a video signal of the display apparatus 100 through the terminal 200 using a simple operation.

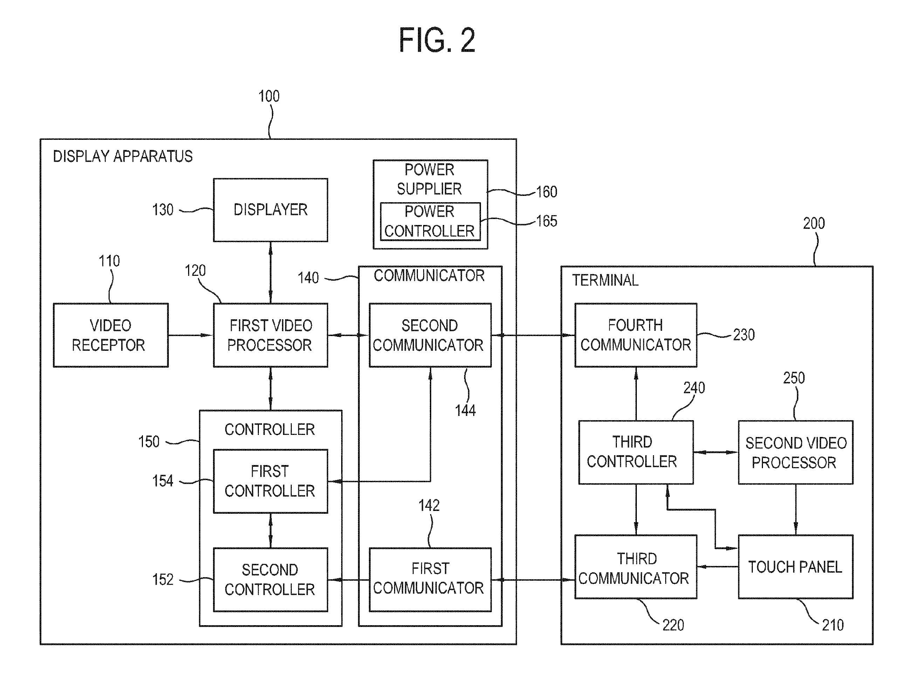

FIG. 2 is a block diagram illustrating a display apparatus 100 and a terminal 200 according to a first exemplary embodiment.

Although FIG. 2 illustrates one terminal 200 for convenience, the present embodiment may be achieved even when a plurality of terminals 200 are used at the same time.

The display apparatus 100 includes a displayer 130, a communicator 140, and a controller 150. The display apparatus 100 may further include a power supplier 160, a video receptor 110, and a first video processor 120 depending on an exemplary embodiment. In one exemplary embodiment, the communicator 140 may include a first communicator 142 and a second communicator 144, while the controller 150 may include a first controller 152 and a second controller 154. The display apparatus 100 may be configured as a digital TV, and any known device which is capable of displaying a video and transmitting a video to a different device.

The video receptor 110 receives a video signal from an external video source (not shown). There is no restriction as to the video source, and the video receptor 110 may receive video signals from various kinds of video supplier s, e.g., a transmitter of a broadcasting station that transmits broadcast signals through ground waves or a cable, a video source connected via a cable including a STB or DVD player, and a server providing a video signal via a network. The video receptor 110 may include a tuner (not shown) tuning the broadcast signals and a port (not shown) for connection to the video source connected via the cable.

The first video processor 120 performs various video processing processes on a video signal received through the video receptor 110 to display a video on the displayer 130. The first video processor 120 may perform any kind of video processing, without being limited to, for example, decoding corresponding to various video formats, deinterlacing, frame refresh rate conversion, scaling, noise reduction to improve video quality, detail enhancement, line scanning, etc.

The displayer 130 displays a video based on a video signal processed by the first video processor 120. The displayer 130 may include a display panel (not shown) displaying a video thereon, configured as a liquid crystal display (LCD), a plasma display panel (PDP) or organic light emitting diodes (OLEDs), and a panel driver (not shown) controlling timing so that a video signal is present on the display panel.

The communicator 140 may receive a user input signal from the external terminal 200 and transmit a video signal to the terminal 200. In the present embodiment, the communicator 140 may include the first communicator 142 and the second communicator 144, which use different communication modes. For example, the first communicator 142 may be configured to receive the user input signal from the terminal 200 via Bluetooth, while the second communicator 144 may be configured to transmit the video signal to the terminal 200 via Wi-Fi.

The first communicator 142 receives the user input signal from the terminal 200. The user input signal includes a video transmission request and a video display request, and may include various known input signals, e.g., channel/volume control instructions and display control instructions. The first communicator 142 may be configured as a communication module in accordance with a Bluetooth standard, and enables transmission and reception of input signals after pairing with the terminal 200 by transmitting a personal identification number (PIN). As described above, the display system may include a plurality of terminals 200, in which each terminal 200 as a slave is connected to the display apparatus 100 as a master to transmit an input signal to the display apparatus 100. Alternatively, the first communicator 142 may be configured as an infrared (IR) signal receiver to receive an input signal from the terminal 200.

The second communicator 144 transmits the video signal to the terminal 200. The video signal may be received through the video receptor 110 and corresponds to a video displayed on the displayer 130 using part of the video processing processes conducted by the first video processor 120. The second communicator 144 may be configured as a communication module in accordance with a Wi-Fi standard, and a video signal transmitted from the second communicator 144 may be transmitted to the terminal 200 through a network via an access point (AP).

The first controller 152 monitors whether the first communicator 142 receives an input signal. The first controller 152 may be configured as a hardware processor capable of operating with a simple configuration and low power consumption, e.g., a microcontroller, and monitor a user input through a key input unit (not shown) provided on an outside of the first communicator 142 or the display apparatus 100. The first communicator 142 and the first controller 152 may maintain an on state so as to receive a user input even when an operating mode of the display apparatus 100 is an off mode.

The second controller 154 may control the display apparatus 100, including the second communicator 144, the video receptor 110, the first video processor 120, the displayer 130, the power supplier 160, and be configured as a central processing unit (CPU).

When the user input signal received from the terminal 200 through the first communicator 142 includes a video transmission request, the second controller 154 changes the operating mode from the off mode to a transmission mode to control the second communicator 144 to transmit a video signal to the terminal 200 having transmitted the video transmission request. Further, when the received user input signal includes a video display request, the second controller 154 changes the operating mode to the off mode to control the displayer 130 to display a video, in which the second controller 154 may suspend transmission of images to the terminal 200 through the second communicator 144.

The power supplier 160 serves to supply power to each component of the display apparatus 100. The power supplier 160 may control power supply to each component based on each operating mode, which may be carried out by the power controller 165.

In a related art, the display apparatus 100 operates in either a power off state or a power on state. When a user watches a video on the terminal 200, all components of the display apparatus 100, including the displayer 130, maintains the on state to transmit a video signal. Thus, since the displayer 130 of the display apparatus 100 does not need to display an image, excessive power consumption is maintained. To solve the excessive power consumption, the operating mode of the display apparatus 100, according to the present embodiment, is divided into an off mode, a transmission mode, and a display mode. When the operating mode of the display apparatus 100 is divided into separate modes, power consumption is reduced.

The off mode is a soft power off state, in which the display apparatus 100 is connected to a power supply and does not conduct a function. In this case, only the first communicator 142 and the first controller 152 may be in an on state so as to receive a user input. However, the remaining components of the display apparatus 100, including the video receptor 110, the first video processor 120, the second communicator 144, the second controller 154, and the displayer 130 may be in an off state.

The transmission mode is a state in which the display apparatus 100 transmits a video signal but does not display a video on the displayer 130. In this case, the displayer 130 is in an off state, whereas the remaining components needed operate normally to transmit a video. In other words, in addition to the first communicator 142 and the first controller 152, which are on state in the off mode, the video receptor 110, the first video processor 120, the second communicator 144, and the second controller 154 are in an on state and provided with power.

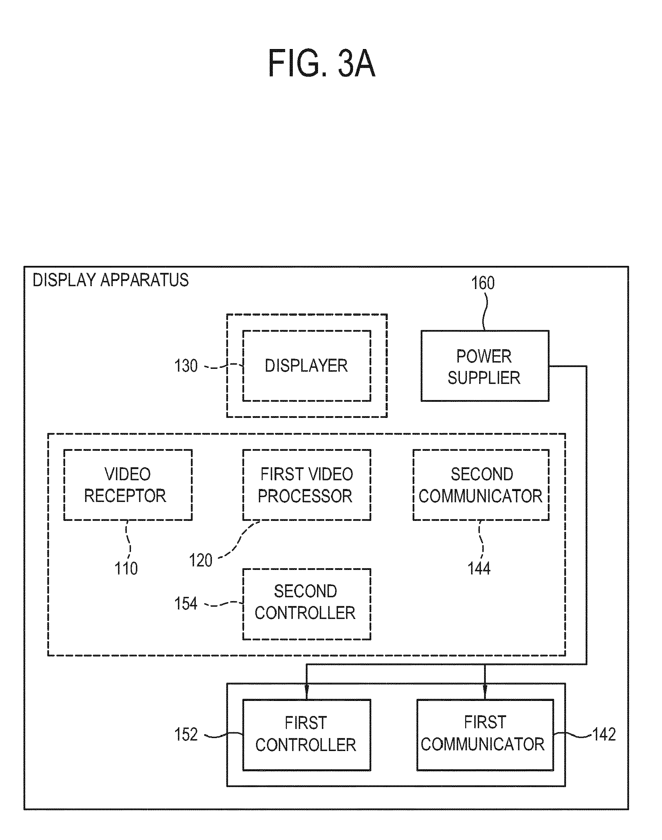

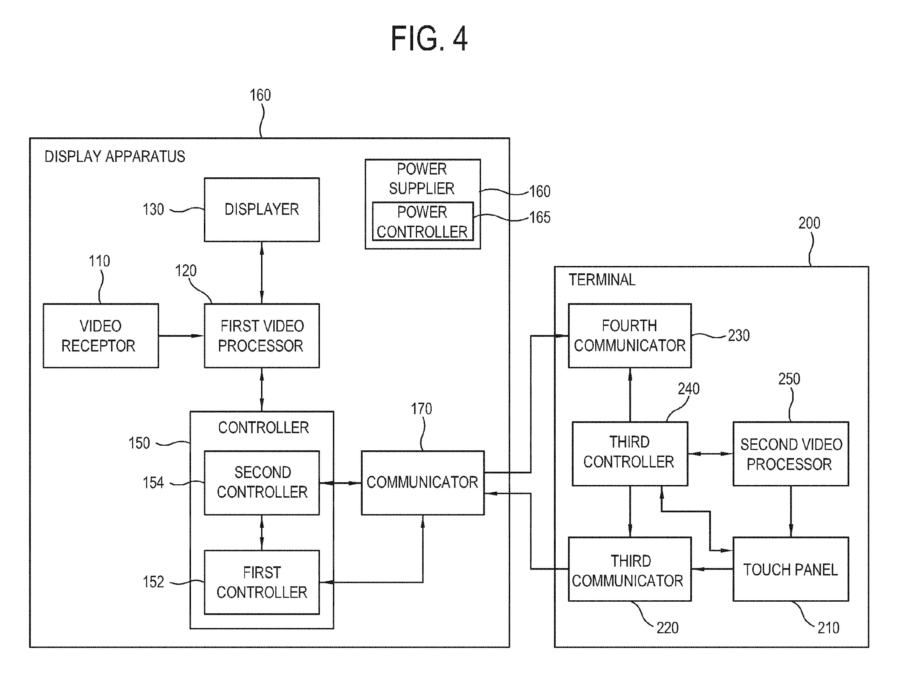

The display mode is a state in which all components of the display apparatus 100, including the displayer 130, operate normally. A change in operating mode and control of power supply based on a user input signal will be described in detail with reference to FIGS. 3A to 3C and 4A to 4C.

As shown in FIG. 1, the terminal 200 of the display system includes a touch panel 210, a third communicator 220, a fourth communicator 230, a third controller 240, and a second video processor 250. The terminal 200, which is carried by the user, is capable of displaying a video and has a communication function. The terminal 200 may be configured as a smartphone or a tablet PC.

The touch panel 210 displays a video and receives a user input through a touch recognition function. The user input using the touch panel 210 may include a motion of touching the touch panel 210 with a finger or an object, a motion of touching the touch panel 210 and making a movement in a particular direction, and a motion of pressing the touch panel 210 for a predetermined time. The third controller 240 performs a preset control, depending on each motion and controls to transmit a preset input signal to the display apparatus 100, based on each motion.

The third communicator 220 transmits the user input signal through the touch panel 210 to the first communicator 142 of the display apparatus 100. The third communicator 220 may be configured as a communication module, in accordance with the Bluetooth standard, similar to the first communicator 142.

The fourth communicator 230 receives the video signal transmitted from the second communicator 144 of the display apparatus 100. The fourth communicator 230 may be configured as a Wi-Fi communication module similar to the second communicator 144.

The third controller 240 may be configured as a CPU or a microcomputer, which is responsible for control of the terminal 200. When the user input through the touch panel 210 includes at least one of a video transmission request, a video display request, and a power off request, the third controller 240 controls the third communicator 220 to transmit an input signal including the at least one request to the display apparatus 100. When a video signal is received through the fourth communicator 230, the third controller 240 controls the second video processor 250 to process the video signal to display a video on the touch panel 210.

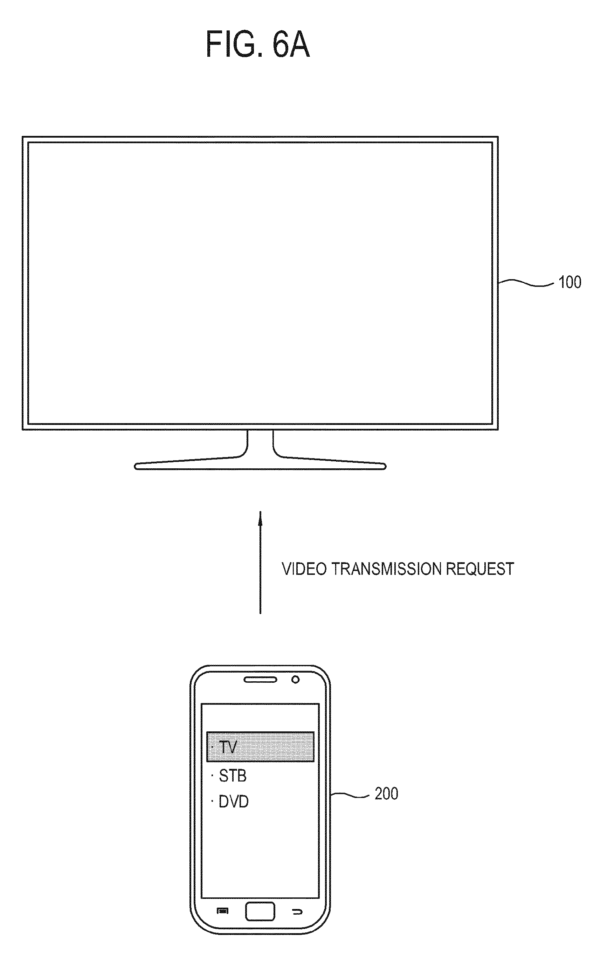

Hereinafter, the change in operating mode and the control of power supply, according to the first embodiment, will be described in detail with reference to FIGS. 3A to 3C and 6A to 6C.

### 1. Off mode

Suppose that the user wishes to watch a video of the display apparatus 100 through the terminal 200 when the display apparatus 100 is initially in the off mode. As shown in FIG. 3A, in the off mode, the display apparatus 100 turns on a minimum configuration necessary to receive a user input signal, i.e., the first controller 152 and the first communicator 142 only, and turns off the remaining components. As described above, the first controller 152 may be configured as a microcomputer capable of operating with low power and the first communicator 142 may be configured as a Bluetooth module, which consumes less power than a Wi-Fi module. Therefore, a very small amount of power is consumed in the off mode.

The terminal 200 may store a particular application for receiving the video of the display apparatus 100, which may be run by the third controller 240. The user may select a video signal of the display apparatus 100 through the run application, i.e., a video desired to watch among terrestrial/cable broadcast signals of a particular channel received by the display apparatus 100 or video signals received from a video source connected to the display apparatus 100, such as the STB and the DVD player, and the terminal 200 may provide a UI on the touch panel 210 to select a video transmission request and a video signal requested for transmission.

As shown in FIG. 6A, in the off mode, the displayer 130 of the display apparatus 100, which is in the off state, does not display an image. When the user runs the application on the terminal 200, a UI may be provided to select a source to receive a video signal.

When the user inputs a motion corresponding to the video transmission request through the touch panel 210, i.e., when any one source is selected on the UI in FIG. 6A, the third controller 240 controls the third communicator 220 to transmit an input signal including the video transmission request to the first communicator 142. When the input signal, including the video transmission request, is received through the first communicator 142, the first controller 152 turns on the second controller 154 to change the operating mode to the transmission mode.

### 2. Transmission mode

The operating mode is changed from the off mode to the transmission mode when the user attempts to watch the video of the display apparatus 100 through the terminal 200, instead of the display apparatus 100.

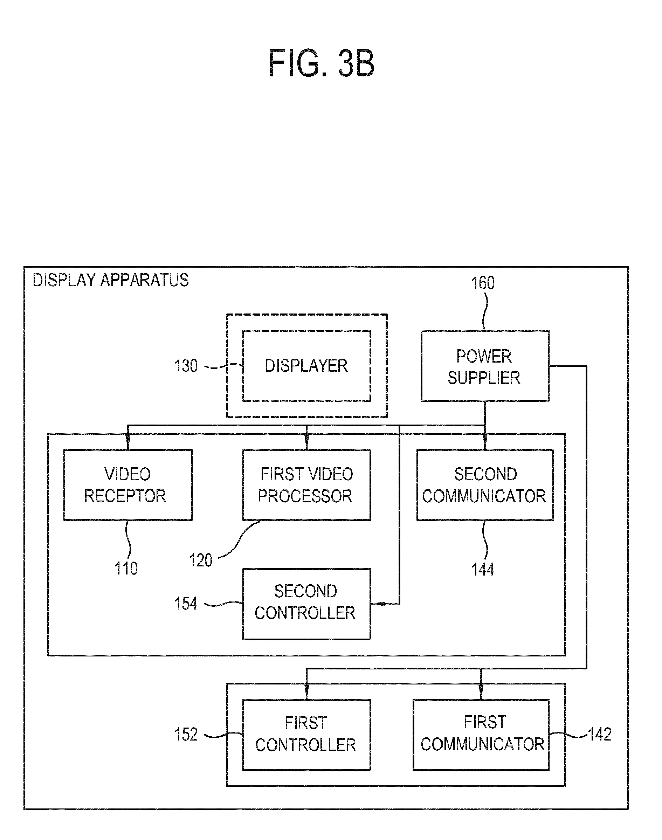

When the operating mode is changed from the off mode to the transmission mode, as shown in FIG. 3B, the power controller 165 controls to turn on the video receptor 110, the video processor 120, the second communicator 144 and the second controller 154, which are off-state components in the off mode, except for the displayer 130, so as to transmit an image. As described above, since the second communicator 144 may be configured as the Wi-Fi module consuming comparatively high power, the second communicator 144 is turned on in the transmission mode in which an operation for video transmission is requested, and is turned off in the off mode. Thus, a power saving effect is achieved. Further, the displayer 130, which takes up a greater part of power consumption, is in an off state. Thus, the exemplary embodiments may achieve more power savings than the display mode.

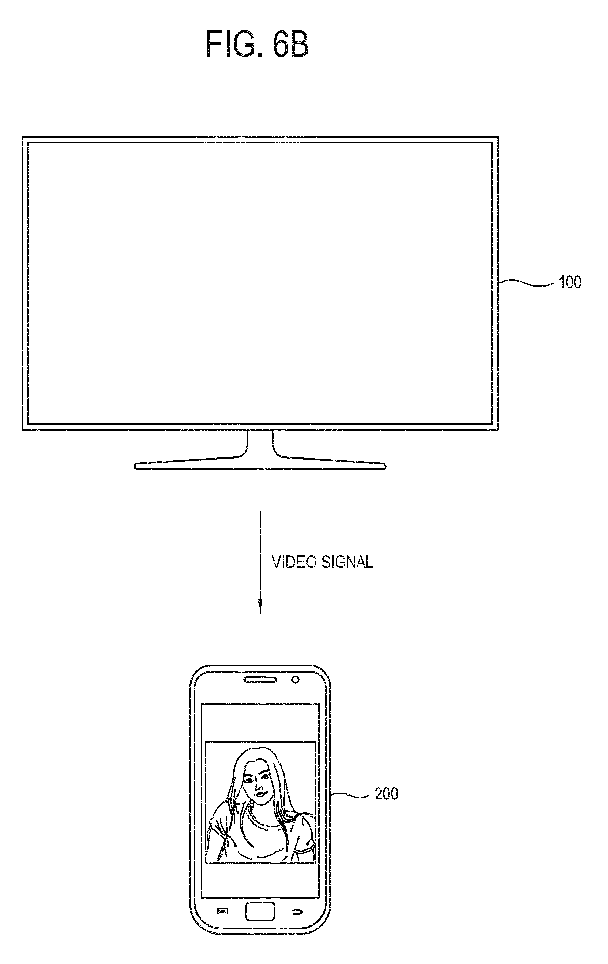

Meanwhile, in the transmission mode, the video receptor 110 and the video processor 120 operate according to control of the second controller 154 to start receiving and processing the video signal requested by the user, and the processed video signal is transmitted to the fourth communicator 230 of the terminal 200 through the second communicator 144. The video signal is transmitted in a transport stream format, and the third controller 240 of the terminal 200 controls the touch panel 210 to display the received video signal thereon, as shown in FIG. 6B.

### 3. Display mode

The operating mode is changed from the transmission mode to the display mode when the user wishes to keep watching the image, being displayed on the terminal 200, through the display apparatus 100.

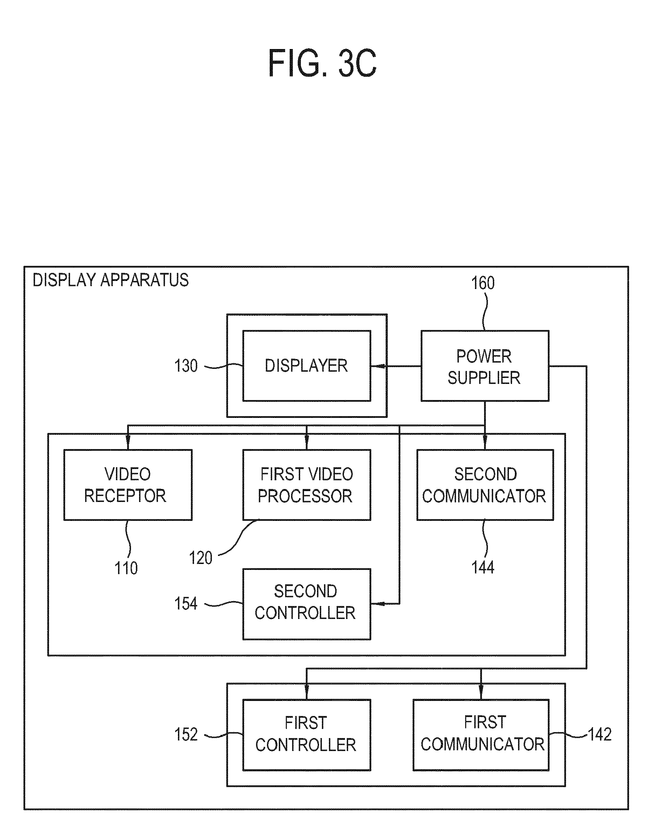

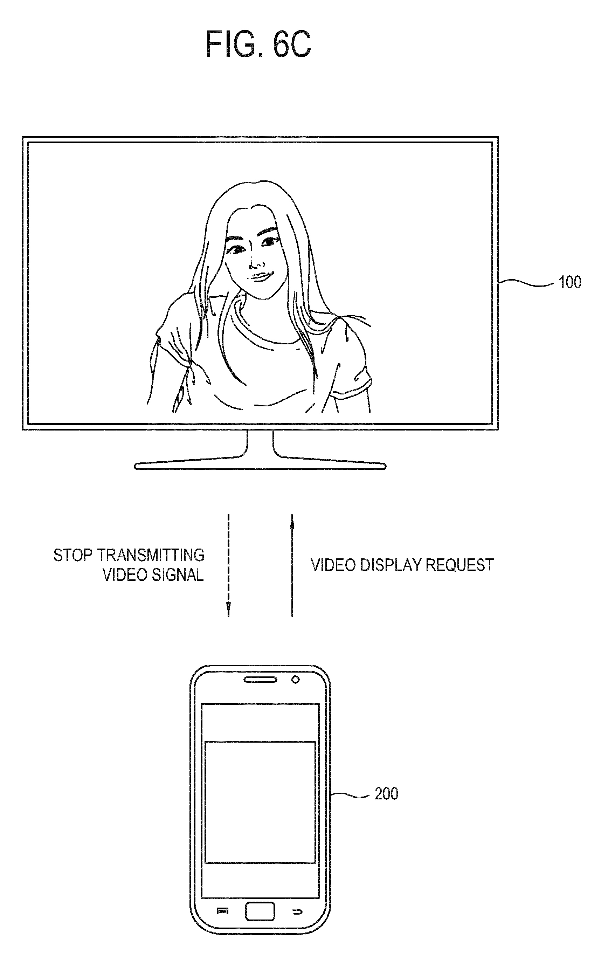

As shown in FIG. 6C, when the received user input signal includes a video display request, the second controller 154 changes the operating mode to the display mode and controls the displayer 130 to display the video signal. The second controller 154 may stop transmitting the video signal from the second communicator 144 to the fourth communicator 230 of the terminal 200. As shown in FIG. 3C, when the operating mode is changed to the display mode, the power supplier 160 supplies power to the displayer 130 to display an image.

According to the foregoing embodiment, the user may receive and watch a video signal, viewable on the display apparatus 100 in the off mode, on the terminal 200 using a simple input through the terminal 200. Thus, power consumed is reduced by the display apparatus 100. Although the foregoing embodiment illustrates a sequential change of the operating mode from the off mode to the transmission mode, then to the display mode, various embodiments may be realized based on a user input, for example, a change from the transmission mode back to the off mode.

In the first embodiment, the display apparatus 100 and the terminal 200 transmit and receive input signals through a local area network, e.g., Bluetooth. Thus, the display apparatus 100 and the terminal 200 may be used within a short range and connect to a Wi-Fi network through the same AP. In a case that the terminal 200 goes out of the network of the connected AP, the user no longer wants to watch the video of the display apparatus 100.

Thus, when the terminal 200 is out of the Wi-Fi network, the second controller 154 may control the second communicator 144 to stop transmitting a video signal to the terminal 200. In this case, the second controller 154 may turn off the second communicator 144 by changing the operating mode to the off mode. Further, the second controller 154 may change the operating mode to the off mode after a predetermined amount of time after the terminal 200 is out of the network.

FIG. 4 is a block diagram illustrating a display apparatus 100 and a terminal 200 according to a second exemplary embodiment.

As shown in FIG. 4, the display apparatus 100 according to the second embodiment includes a displayer 130, a communicator 170 and a controller 150. The display apparatus 100 may further include a power supplier 160, a video receptor 110, and a first video processor 120 depending on an exemplary embodiment. In the present embodiment, the controller 150 may include a first controller 152 and a second controller 154. Hereinafter, components having different features from those in the first embodiment will be mentioned, while descriptions of components having the same features to those in the first embodiment will be omitted.

Unlike the first embodiment illustrated with reference to FIGS. 2 and 3A to 3C, the display apparatus 100 according to the second embodiment includes a single communicator 170. In other words, the display apparatus 100 may receive a user input signal from an external terminal 200 and transmit a video signal to the terminal 200 through the communicator 170 having a single communication mode. The communicator 170 may be configured as a Wi-Fi communication module. In the present embodiment, as the communicator 170 uses Wi-Fi, the user may turn on the display apparatus 100 or make a request for transmission of a video through the terminal 200 at a long distance from the display apparatus 100, i.e., outside.

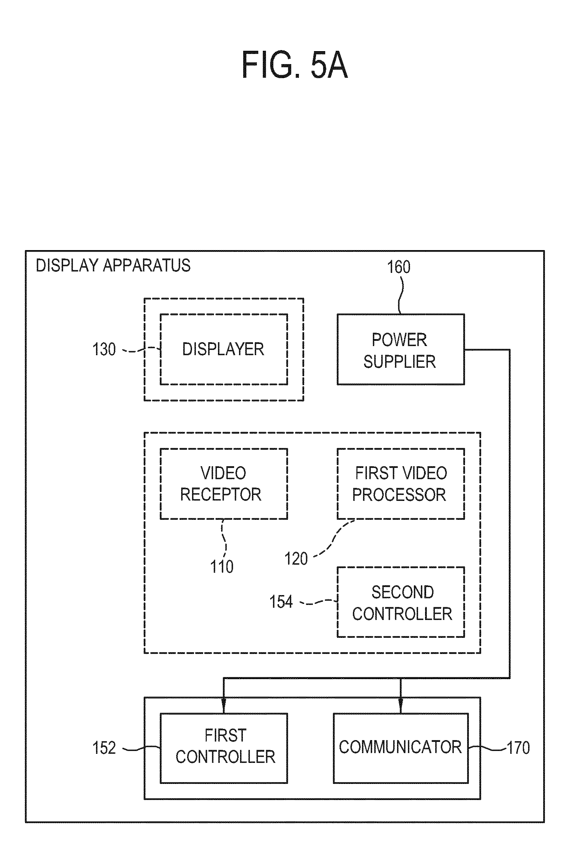

In the present embodiment, since the communicator 170 receives the user input signal through Wi-Fi, the first controller 152 and the communicator 170, which are in an on state, monitor whether the user input signal is received in the off mode. As shown in FIG. 5A, the power supplier 160 supplies power to the first controller 152 and the communicator 170 in the off mode. When the user inputs a motion corresponding to a video transmission request through a touch panel 210, i.e., when any one source is selected on the UI in FIG. 6A, a third controller 240 controls a third communicator 220 to transmit an input signal including the video transmission request to the communicator 170. When the input signal including the video transmission request is received through the communicator 170, the first controller 152 turns on the second controller 154 to change the operating mode to the transmission mode.

When the operating mode is changed from the off mode to the transmission mode, a power controller 165 controls to turn on the video receptor 110, the video processor 120, and the second controller 154, except for the displayer 130. Unlike the first embodiment, only one communicator 170 is provided in the present embodiment. The communicator 170 is in an on state in the off mode and the transmission mode. In the transmission mode, the video signal is also transmitted through the communicator 170.

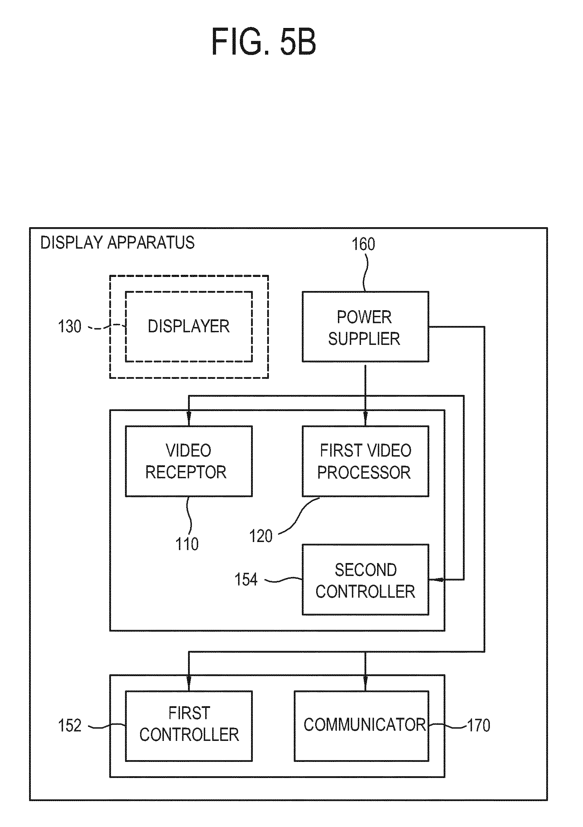

As shown in FIG. 5B, the power supplier 160 additionally supplies power to the video receptor 110, the first video processor 120, and the second controller 154 in the transmission mode.

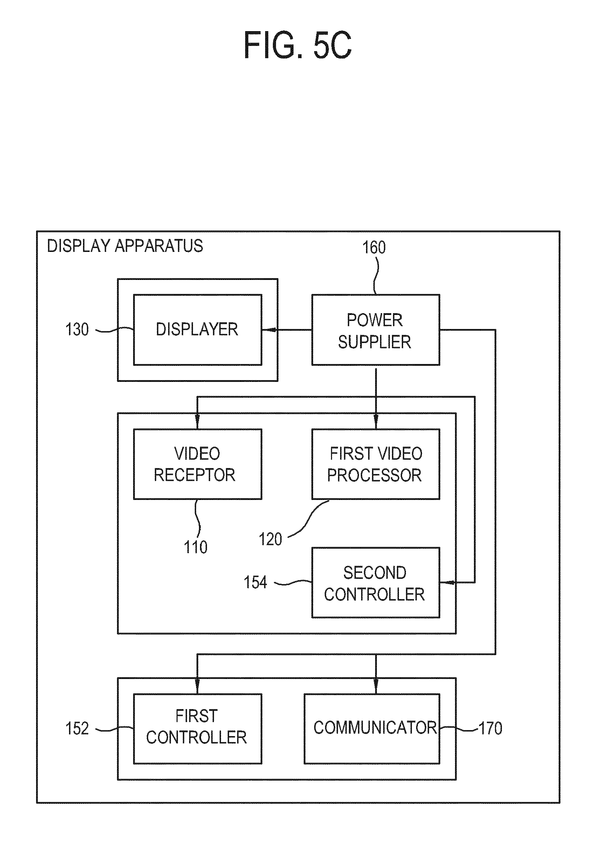

In the transmission mode, when the user input signal received through the communicator 170 includes a video display request, the second controller 154 changes the operating mode to the display mode, and controls the displayer 130 to display the video signal. The second controller 154 may stop transmitting the video signal from the communicator 170 to a fourth communicator 230 of the terminal 200. As shown in FIG. 5C, when the operating mode is changed to the display mode, the power supplier 160 supplies power to the displayer 130 to display an image.

According to the second embodiment, the user may turn on the display apparatus 100 through Wi-Fi communications even outside a long distance from the display apparatus 100 and receive and watch a video signal, viewable on the display apparatus 100, on the terminal 200 using a simple input through the terminal 200.

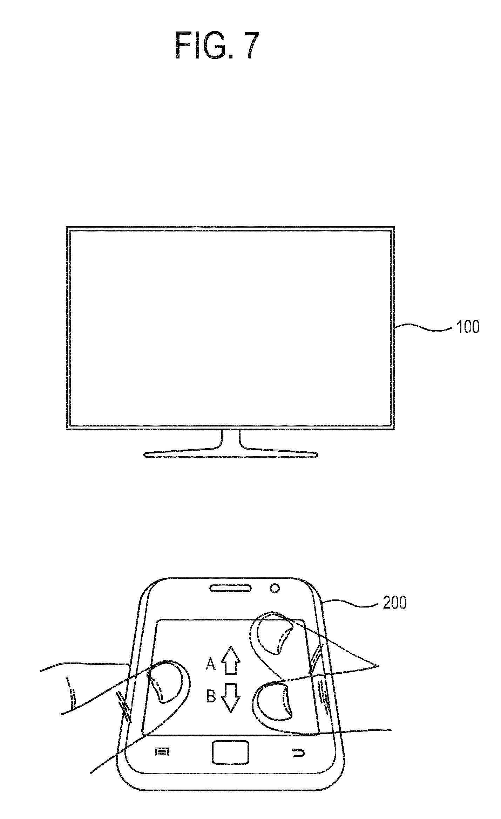

FIG. 7 illustrates an input signal based on an input onto a touch panel 210 of a user terminal.

As described above, various user inputs may be made onto the touch panel 210, and an input signal corresponding to each of various motions is transmitted to the display apparatus 100. For example, when the user touches a spot on the touch panel 210 and moves in a downward direction (B) that is an opposite direction to a location of the display apparatus 100, an input signal including a video transmission request may be transmitted to the display apparatus 100. On the contrary, when the user moves on the touch panel 210 in an upward direction (A) toward the location of the display apparatus 100, an input signal including a video display request may be transmitted to the display apparatus 100.

Such a configuration is provided for user convenience, enabling a user to select a device to display a video on according to a touch moving direction. This enhances user convenience, since many users tilt the terminal 200 to one side.

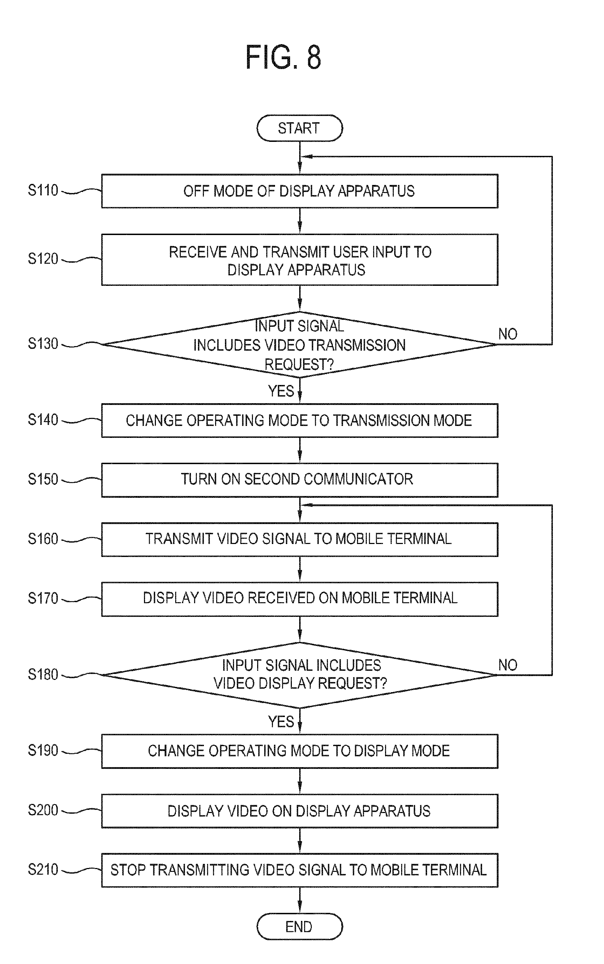

FIG. 8 is a flowchart illustrating a method of providing a video using a display apparatus and a terminal according to an exemplary embodiment.

Initially, the display apparatus is in the off mode (S110).

The terminal receives a user input through a touch panel and transmits an input signal corresponding to the user input to the display apparatus (S120). The user input may include a video transmission request and a video display request. In particular, the user input through the touch panel may include, for example, the video transmission request corresponding to a motion of touching a spot on the touch panel and moving in a first direction, and the video display request corresponding to a motion of moving on the touch panel in a second direction, opposite the first direction.

When the received input signal includes the video transmission request (S130), the display apparatus changes the operating mode to the transmission mode (S140). The operating mode of the display apparatus may include the off mode, the transmission mode and the display mode, and operations and power supply control in each mode are substantially the same as those described in the first and second embodiments.

When the operating mode is changed from the off mode to the transmission mode, the display apparatus 100, according to the first embodiment, turns on a second communicator (S150) and transmits a video signal to the terminal (S160). The second communicator is configured as a Wi-Fi module, which is capable of transmitting a comparatively high-capacity video signal to the terminal.

The display apparatus 100, according to the second embodiment, receives the user input signal and transmits a video signal to the terminal through a single communicator. Thus, operation S150 is omitted in the second embodiments.

When the video signal is received, the terminal displays the video signal on the touch panel (S170).

The user may wish to keep watching an image, being viewed on the terminal, through a display apparatus with a large screen. In this case, the user may input a motion corresponding to the video display request through the touch panel. When the video signal received from the terminal includes the video display request (S180), the display apparatus changes the operating mode from the transmission mode to the display mode (S190).

When the operating mode is changed to the display mode, power is supplied to a display panel and a video may be displayed on the display panel (S200). Transmission of a video to the terminal may be stopped (S210).

Alternatively, the display apparatus may stop transmitting a video signal to the terminal when the terminal is out of a Wi-Fi network. In this case, the operating mode may be changed to the off mode, which may be achieved after a predetermined amount of time since the terminal is out of the network range.

According to another aspect of the exemplary embodiments, any of the video receptor 110, the first video processor 120, the displayer 130, the communicator 140, the controller 150, the power supplier 160, the communicator 170, the touch panel 210, the third communicator 220, the fourth communicator unit 230, the third controller 240, and the second video processor 250 may include at least one hardware processor for performing their respective functions. Further, any of the above units may include a hardware circuit, a hardware module, or a hardware device for performing their respective functions.

As described above, exemplary embodiments may provide an environment to enable the user to receive a video from the display apparatus, and to watch the video through the terminal by a simple motion. Thus, when watching the image power consumption is reduced in the display apparatus.

Although a few exemplary embodiments have been shown and described, it will be appreciated by those skilled in the art that changes may be made in these exemplary embodiments without departing from the invention, the scope of which is defined in the appended claims.

## Claims

1. A display apparatus comprising:
a video receptor configured to receive a video signal;
a displayer configured to display an image;
a communicator configured to receive an input signal from an external terminal and transmit the video signal to the external terminal; and
a controller configured to monitor whether the input signal is received through the communicator, and change an operating mode to a transmission mode from an off mode in which the displayer and the video receptor are in an off state, and control the communicator to transmit the video signal to the external terminal transmitting a video transmission request in response to the received input signal comprising the video transmission request.

2. The display apparatus of claim 1, wherein the communicator comprises a first communicator configured to receive the input signal and a second communicator configured to transmit the video signal, and the first communicator and the second communicator use different communication modes.

3. The display apparatus of claim 2, wherein the controller comprises a first controller configured to monitor whether the first communicator receives the input signal and a second controller configured to control the second communicator to transmit the video signal to the terminal.

4. The display apparatus of claim 3, further comprising a power supplier configured to supply power, wherein the power supplier comprises a power controller configured to control supply of the power to the first communicator and the first controller in the off mode and control supply of the power to the first communicator, the first controller, the second communicator, and the second controller in the transmission mode.

5. The display apparatus of claim 2, wherein the first communicator is configured to receive the input signal from the terminal in accordance with a Bluetooth standard, and the second communicator is configured to transmit the video signal to the terminal via a Wi-Fi network.

6. The display apparatus of claim 5, wherein the controller is configured to control the second communicator to stop transmitting the video signal in response to the terminal being out of the Wi-Fi network.

7. The display apparatus of claim 6, wherein the controller is configured to change the operating mode to the off mode and turn off the second communicator in response to transmission of the video signal being stopped.

8. The display apparatus of claim 1, wherein the communicator is configured to receive the input signal from the terminal and transmit the video signal to the terminal via Wi-Fi.

9. The display apparatus of claim 8, wherein the controller comprises a first controller configured to monitor whether the communicator receives the input signal and a second controller configured to control the communicator to transmit the video signal to the terminal.

10. The display apparatus of claim 9, further comprising a power supplier configured to supply power, wherein the power supplier comprises a power controller configured to control supply of the power to the communicator and the first controller in the off mode and control supply of the power to the communicator, the first controller, and the second controller in the transmission mode.

11. The display apparatus of any one of claim 1 to claim 10, wherein the controller is configured to change the operating mode to a display mode and control display of the video signal on the displayer in response to the input signal comprising a video display request.

12. The display apparatus of claim 11, wherein the controller is configured to stop transmitting the video signal through the communicator in response to the operating mode being changed to the display mode.

13. A terminal comprising:
a touch panel configured to receive a user input;
a communicator configured to transmit a user input signal through the touch panel and receive a video signal from a display apparatus; and
a controller configured to control the communicator to transmit an input signal comprising at least one of a video transmission request, a video display request, and a power off request to the display apparatus, in response to the user input through the touch panel comprising the at least one of the video transmission request, the video display request, and the power off request, and controlling the touch panel to display the video signal received from the display apparatus through the communicator.

14. The terminal of claim 13, wherein the controller is configured to control the communicator to transmit the input signal comprising the video transmission request in response to the user input being a motion of touching a spot on the touch panel and moving the user input on the touch panel in a first direction, and transmit the input signal comprising the video display request in response to the user input being the motion of touching the spot on the touch panel and moving the user input on the touch panel in a second direction, which is opposite of the first direction.

15. The terminal of claim 13 or claim 14, wherein the communicator comprises a first communicator configured to transmit the input signal to the display apparatus in accordance with a Bluetooth standard and a second communicator configured to receive the video signal from the display apparatus via Wi-Fi.
